# FASCICULE DE BREVET EUROPEEN

(11) **EP 1 609 719 B1**
(45) Date de publication et mention de la délivrance du brevet: **18.06.2008**
(21) Numéro de dépôt: 05105407.0
(22) Date de dépôt: 17.06.2005
(51) Int. Cl.: B64D 29/00, B64C 7/02, F03H 5/00, F02K 1/64

(54) **Procédé de freinage d'un avion et turboréacteur à double flux pour la mise en oeuvre du procédé**
Bremsverfahren für Flugzeuge und Nebenstromluftstrahltriebwerk zur Umsetzung des Verfahrens
Method for braking aircraft and turbo fan jet engine for implementing the method

(30) Priorité: 21.06.2004 FR 0406697
(43) Date de publication de la demande: 28.12.2005
(73) Titulaire: SNECMA, 75015 Paris (FR)
(72) Inventeur: Lardellier, Alain, Marie, Joseph, 77000 Melun (FR)
(74) Mandataire: David, Daniel

(56) Documents cités:
- GB-A- 1 388 406
- US-A- 3 620 022
- US-A- 4 485 970

## Description

L'invention concerne un procédé de freinage d'un avion et un turboréacteur de mise en oeuvre du procédé.

Dans l'aviation civile, les turboréacteurs utilisés sont généralement des turboréacteurs dits à double flux. Ils comprennent, d'amont en aval dans le sens de l'écoulement des gaz, une soufflante, un ou plusieurs étages de compresseurs, une chambre de combustion, un ou plusieurs étages de turbines et une tuyère d'échappement des gaz. Une partie du flux d'air entraîné par la soufflante, appelé flux primaire ou flux chaud, est entraîné vers les parties du coeur du turboréacteur qui viennent d'être énumérées. Le reste du flux d'air, appelé flux secondaire ou flux froid, est directement éjecté en sortie de la soufflante, dans une tuyère secondaire située entre le carter extérieur du coeur du turboréacteur et la nacelle de ce dernier. Une partie du flux secondaire peut éventuellement être réinjectée dans le flux primaire à des fins de refroidissement, par exemple, mais la majeure partie de ce flux secondaire n'est utilisée que pour obtenir la poussée du turboréacteur. Dans le cas des turboréacteurs à double flux à usage civil, la poussée du turboréacteur provient principalement du flux secondaire.

Les turboréacteurs possèdent, dans la partie arrière de leur nacelle, des inverseurs de poussée, utilisés lors de la phase d'atterrissage pour provoquer une poussée opposée au déplacement de l'avion et faciliter son freinage. Les inverseurs de poussée se présentent sous la forme de volets pouvant être placés radialement dans le flux secondaire et orientés, vers l'extérieur, vers l'amont du turboréacteur, afin d'imposer au flux d'air qui les rencontre un mouvement vers l'amont du turboréacteur, inversant de ce fait la poussée produite.

Lors de l'atterrissage de l'avion, le turboréacteur est tout d'abord mis en régime ralenti, afin de permettre à l'avion de se poser, puis les inverseurs de poussée sont mis en place et le régime du turboréacteur est de nouveau augmenté, afin d'augmenter la contre-poussée produite par les inverseurs.

Des inverseurs de poussée sont présentés dans les documents GB 1,388,406, US 3,620,022 et US 4,485,970.

Ces dispositifs inverseurs de poussée utilisés pour le freinage d'un avion présentent des inconvénients. Tout d'abord, ils sont lourds et complexes, ce qui est d'autant plus gênant qu'ils sont placés à l'arrière du turboréacteur, créant un porte à faux par rapport au plan de suspension du turboréacteur à l'aile de l'avion. En outre, la diminution puis l'augmentation du régime du turboréacteur entraînent une consommation de carburant élevée lors de l'atterrissage. Les sollicitations mécaniques sur les pièces du turboréacteur lors de l'inversion de poussée sont grandes. La soufflante, notamment, voit sa durée de vie réduite du fait des opérations avec inverseurs de poussée. Enfin, le procédé d'atterrissage est relativement complexe, avec la succession de diminutions et d'augmentations de régime moteur.

La présente invention vise à pallier ces inconvénients.

On définit le rapport de dilution comme le rapport entre le débit du flux secondaire et le débit du flux primaire. Les turboréacteurs utilisés dans l'aviation civile tendent vers des rapport de dilution de plus en plus élevés, par souci d'amélioration de la consommation en carburant et de diminution du bruit du turboréacteur. Les turboréacteurs à fort rapport de dilution possèdent généralement une soufflante de diamètre important, qui génère donc une forte traînée qui peut être utilisée pour freiner l'avion, lorsque les turboréacteurs fonctionnent en régime de ralenti.

Toutefois, en fin de course, lorsque la vitesse de l'avion est faible, la force de freinage liée à la traînée est faible, puisque la traînée dépend de la vitesse. En outre, dans ce cas, la soufflante continue de générer de la poussée qui, même en fonctionnement au ralenti, est trop importante pour autoriser un arrêt de l'avion. Il faut donc trouver un procédé et un dispositif permettant d'autoriser le freinage de l'avion, y compris lors de cette dernière phase.

A cet effet, l'invention concerne un procédé de freinage d'un avion, propulsé par au moins un turboréacteur à double flux, ce dernier comprenant une soufflante, un coeur de turboréacteur dans lequel circule le flux primaire, une tuyère d'échappement du flux secondaire, enveloppée par une nacelle, caractérisé par le fait, qu'en régime de ralenti, on décharge au moins une partie du flux secondaire de manière à réduire la poussée résiduelle du turboréacteur sans produire de contre-poussée.

Grâce au procédé de l'invention, le freinage de l'avion peut être obtenu sans dispositif inverseur de poussée, grâce à la force de freinage générée par la traînée du ou des turboréacteurs, complétée par une réduction de la poussée résiduelle par décharge du flux secondaire lorsque cela est nécessaire, si possible l'annulation de la poussée générée par le flux secondaire.

De préférence, on décharge le flux secondaire par l'ouverture de moyens d'ouverture radiale de la nacelle.

Avantageusement dans ce cas, on obstrue la section de la tuyère d'échappement du flux secondaire en aval des moyens d'ouverture radiale grâce à des moyens d'obstruction de ladite tuyère.

L'invention concerne également un turboréacteur à double flux, comprenant une soufflante, un coeur de turboréacteur dans lequel circule le flux primaire, une tuyère d'échappement du flux secondaire, enveloppée par une nacelle, caractérisé par le fait qu'il comprend des moyens d'ouverture radiale de la nacelle permettant de décharger au moins une partie du flux secondaire, sans produire de contre-poussée.

De préférence, le turboréacteur comprend, en aval des moyens radiaux d'ouverture, des moyens d'obstruction de la tuyère secondaire.

L'invention sera mieux comprise grâce à la description suivante de la forme de réalisation préférée du turboréacteur et du procédé de freinage d'un avion de l'invention, en référence aux dessins annexés, sur lesquels :
- la figure 1 représente une vue partielle en coupe axiale schématique d'une forme de réalisation d'un premier type de turboréacteur selon l'invention, en configuration de vol ;
- la figure 2 représente une vue partielle en coupe axiale schématique du turboréacteur de la figure 1, en configuration de freinage ;
- la figure 3 représente une vue schématique de face de la tuyère d'échappement du flux secondaire du turboréacteur de la figure 2 ;
- la figure 4 représente une vue partielle en coupe axiale schématique d'une forme de réalisation d'un deuxième type de turboréacteur selon l'invention, en configuration de vol, et
- la figure 5 représente une vue partielle en coupe axiale schématique du turboréacteur de la figure 4, en configuration de freinage.

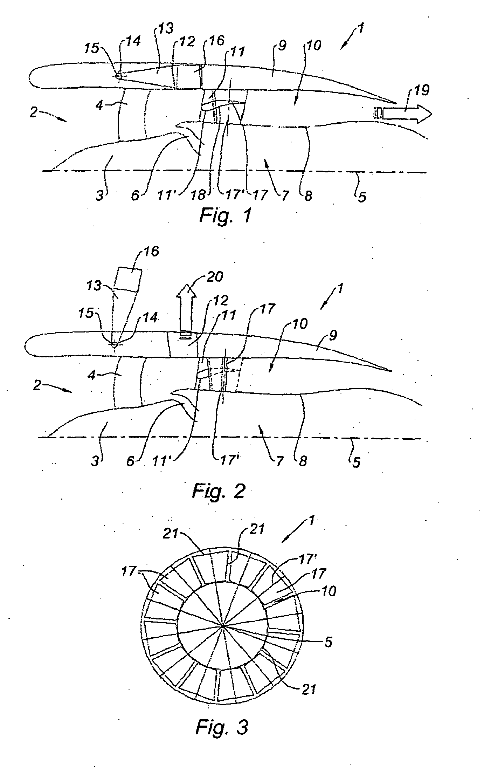

Les figures 1 à 3 sont des représentations d'un turboréacteur 1 à soufflante amont simple 2. Cette soufflante 2, positionnée dans la partie amont du turboréacteur 1, comprend classiquement un rotor 3, monté rotatif autour de l'axe 5 du turboréacteur, à partir et autour duquel s'étend une unique série d'aubes radiales 4, toutes situées à la même abscisse longitudinale sur l'axe 5 du turboréacteur 1.

En aval des aubes 4, le turboréacteur 1 comprend un canal 6 d'accès pour l'air au coeur 7 du turboréacteur 1, situé juste en aval du rotor 3 de la soufflante 4. Le flux d'air qui passe dans ce canal 6 est appelé flux primaire ; ce canal 6 sera par la suite nommé canal du flux primaire 6. Le coeur 7 du turboréacteur comprend typiquement un ou plusieurs étages de compresseurs, une chambre de combustion, un ou plusieurs étages de turbines et une tuyère d'échappement des gaz, non représentés. Ces divers éléments sont enveloppés dans un carter 8 que nous nommerons carter du coeur du turboréacteur 8. La soufflante 4 est enveloppée par une nacelle 9 qui s'étend en amont et en aval de la soufflante 4 et enveloppe une grande partie du turboréacteur 1.

Le flux d'air, qui ne passe pas dans le canal du flux primaire 6, passe dans une tuyère secondaire 10, définie entre le carter du coeur du turboréacteur 8 et la paroi intérieure de la nacelle 9. C'est principalement ce flux d'air, appelé flux secondaire, qui fournit la poussée du turboréacteur 1.

Le turboréacteur 1 possède un rapport de dilution élevé, typiquement supérieur ou égal à 10. Ses dimensions transversales, c'est-à-dire la surface qu'il présente en vue de face, sur l'axe 5, sont grandes.

La nacelle 9 est notamment supportée par des bras 11, situés en aval de l'entrée du canal du flux primaire 6 et s'étendant radialement entre le carter du coeur du turboréacteur 8 et la paroi interne de la nacelle 9. La nacelle 9 comprend, en amont de ces bras 11 et en aval des aubes 4 de la soufflante 2, au moins un orifice 12 qui peut être fermé ou ouvert par un bras mobile 13 correspondant, ci-après dénommé porte 13.

La porte 13 se présente sous la forme d'un bras, dont une extrémité 14 est fixée à un axe 15, solidaire de la nacelle 9 et s'étendant perpendiculairement à l'axe 5 du turboréacteur 1. La porte 13 est montée mobile en rotation dans un plan axial autour de cet axe 15. Son extrémité libre 16 est conformée pour venir fermer l'orifice 12 lorsque la porte 13 est abaissée. Lorsque la porte 13 est relevée, l'orifice 12 est ouvert et la porte 13 s'étend sensiblement dans un plan transversal du turboréacteur 1.

Par les termes abaissée ou relevée pour la porte 13, on entend orientée ou déplacée vers l'intérieur ou vers l'extérieur du turboréacteur 1, respectivement, indépendamment de la position angulaire de la porte 13 sur la nacelle 9.

Dans la forme de réalisation décrite du turboréacteur 1 des figures 1 à 3, le turboréacteur 1 comporte deux orifices 12 et deux portes 13 correspondantes. Les deux orifices 12 sont diamétralement opposés, positionnés de façon à se trouver, lorsque le turboréacteur 1 est monté sur un avion, dans un plan parallèle au plan des ailes de l'avion.

Le turboréacteur 1 comprend, juste en aval des bras 11 de support de la nacelle 9, des panneaux profilés 17, s'étendant radialement, globalement suivant un axe 17', entre le carter du coeur du turboréacteur 8 et la nacelle 9.

Sur la figure 1, on a représenté, à l'intérieur des bras 11 et des panneaux 17, une vue en coupe 11', 18, respectivement, de ces éléments, suivant un plan transverse à l'axe radial selon lequel ils s'étendent. On voit que les panneaux 17 sont profilés de façon à compléter le profil des bras 11 et à former avec eux un profil comparable à celui d'une aube. Ils assurent ainsi avec eux une fonction de guidage, d'orientation et de redressement du flux d'air secondaire dans la tuyère secondaire 10.

Les panneaux profilés 17 sont montés rotatifs autour de leur axe 17'. Il est ainsi possible, en référence à la figure 2, de les faire pivoter de 90° autour de leur axe 17' afin de les amener à s'étendre transversalement à l'axe 5 du turboréacteur 1. Sur la figure 2 est représentée, en pointillés, la position des panneaux et leur vue en coupe de la figure 1, en traits pleins, la position des panneaux 17 une fois le pivotement opéré. On voit sur la figure 3 qu'une fois le pivotement opéré, les panneaux forment des obstacles dans la tuyère secondaire et assurent ainsi une fonction d'obstruction de la tuyère secondaire. Ce pivotement peut être mis en oeuvre par des moteurs individuels ou par un moteur unique relié à un mécanisme de transmission de mouvements, non représentés, bien connus de l'homme du métier.

Le fonctionnement du turboréacteur à soufflante amont simple des figures 1 à 3, dans le cadre du procédé de freinage d'un avion de l'invention, va maintenant être expliqué plus en détails.

Sur la figure 1, le turboréacteur 1 est en configuration de vol. Les portes 13 sont abaissées, c'est-à-dire les orifices 12 fermés, et les panneaux 17 orientés de façon à compléter le profil des bras 11 et orienter le flux d'air secondaire. Dans cette configuration, le flux d'air secondaire, schématisé par une flèche 19, s'écoule dans la tuyère secondaire 10 et fournit la plus grande partie de la poussée du turboréacteur 1.

Lors de la phase d'atterrissage de l'avion, le turboréacteur 1 est mis en régime de ralenti afin de réduire sa poussée et de permettre à l'avion de se poser. Une fois que l'avion a atterri, il est nécessaire de le freiner. Ce freinage était assuré dans les turboréacteurs de l'art antérieur par les dispositifs inverseurs de poussée.

Du fait de ses grandes dimensions transversales, le turboréacteur 1 génère, en raison de la vitesse de l'avion et de son avancée dans l'air, une forte traînée, qui se traduit en une force s'opposant au mouvement de l'avion. Dans le cas d'un turboréacteur dont le rapport de dilution est supérieur ou égal à 10, la force de freinage liée à la traînée est assez grande, lorsque le turboréacteur 1 fonctionne au ralenti, pour ralentir suffisamment l'avion une fois qu'il a atterri. Toutefois, en fin de course, lorsque la vitesse de l'avion est faible, la force de freinage liée à la traînée est faible. En outre, dans ce cas, la soufflante continue de générer de la poussée qui, même en fonctionnement au ralenti, est trop importante pour autoriser un arrêt de l'avion.

Une décharge du flux d'air secondaire va alors être opérée. Les portes 13 sont relevées, c'est-à-dire que les orifices 12 sont ouverts, laissant l'air du flux secondaire s'échapper par les orifices 12. La poussée du turboréacteur 1 est de ce fait réduite. On fait ensuite pivoter les panneaux 17 autour de leur axe 17', afin qu'ils s'étendent transversalement à l'axe 5 du turboréacteur, comme sur la figure 3, et obstruent la tuyère secondaire.

Dans la pratique, on peut ne pas attendre que l'avion ait ralenti pour tirer parti du freinage autorisé par le turboréacteur 1. Les portes 13 sont alors relevées et les panneaux 17 pivotés en position d'obstruction dès que les roues de l'avion touchent le sol.

Dans cette configuration, la poussée du flux d'air secondaire est annulée, ou du moins grandement réduite, puisque le flux, bloqué par les panneaux 17, s'échappe librement par les orifices 12 situés juste en amont de ces derniers, comme représenté par la flèche 20 sur la figure 2. Il s'agit donc d'une décharge du flux d'air. Aucune poussée n'est créée. La poussée résiduelle du turboréacteur 1 est réduite à la seule poussée du flux résiduel primaire, totalement ou du moins en grande partie. En outre, puisque le turboréacteur fonctionne en régime de ralenti, les contraintes sur les panneaux 17 ne sont pas importantes ; ces derniers n'ont été amenés à pivoter qu'une fois les portes 13 ouvertes. Les efforts sont par ailleurs bien repris puisque les orifices 12 et les panneaux 17 se situent à proximité des bras 11 qui font partie de la structure fixe du turboréacteur 1. Typiquement, les orifices 12 présentent une surface de décharge (surface calculée sur la paroi interne de la nacelle 9) représentant environ 10% de la section de la tuyère secondaire à l'abscisse des orifices 12, ou du moins une surface suffisante pour laisser passer sans restriction le débit du flux d'air secondaire de la soufflante au ralenti.

En plus de permettre la décharge du flux d'air secondaire par les orifices 12 et la réduction de la poussée du flux d'air secondaire, les portes 13, lorsqu'elles s'étendent transversalement à l'axe 5 du turboréacteur 1, remplissent une fonction d'aérofreins et apportent de ce fait une participation supplémentaire au freinage de l'avion.

On voit sur la figure 3 qu'il peut exister des fuites 21 entre les panneaux 17. Ces fuites 21 doivent être rendues les plus faibles possibles, et ne sont alors pas gênantes, car le canal défini par la tuyère secondaire 10 est en grande partie obturé, le flux d'air n'ayant pas ou peu tendance à s'engouffrer dans les fuites 21, puisque les orifices 12 sont situés juste en amont de ces dernières. En outre, la poussée résiduelle provenant du flux primaire n'est pas, en régime de ralenti, suffisante pour gêner le freinage de l'avion.

Ainsi, grâce au turboréacteur 1 de l'invention, il est possible d'assurer le freinage de l'avion en utilisant la force de traînée générée par la surface frontale que présente la soufflante 2. Les orifices 12 sont ouverts et les panneaux 17 pivotés à un moment ad hoc du procédé de freinage afin de réduire au maximum la poussée résiduelle liée au fonctionnement en régime de ralenti de la soufflante 2. L'opération est assurée presque sans contraintes, puisqu'aucune poussée n'est générée, l'air s'échappant librement par les orifices 12. Quelques contraintes existent certes sur les panneaux 17, bloquant le flux d'air secondaire et le refoulant vers les orifices 12, et sur les portes 13 assurant une fonction d'aérofreins, mais elles sont négligeables par rapport aux contraintes qui pouvaient être occasionnées par un dispositif inverseur de poussée. Enfin, l'ensemble du procédé de freinage se fait en régime de ralenti de la soufflante 2, simplifiant donc le procédé pour le pilote et réduisant la consommation de carburant, ainsi que l'usure du moteur, puisque le régime n'est pas augmenté en fin de procédé, comme c'était le cas avec des dispositifs inverseurs de poussée.

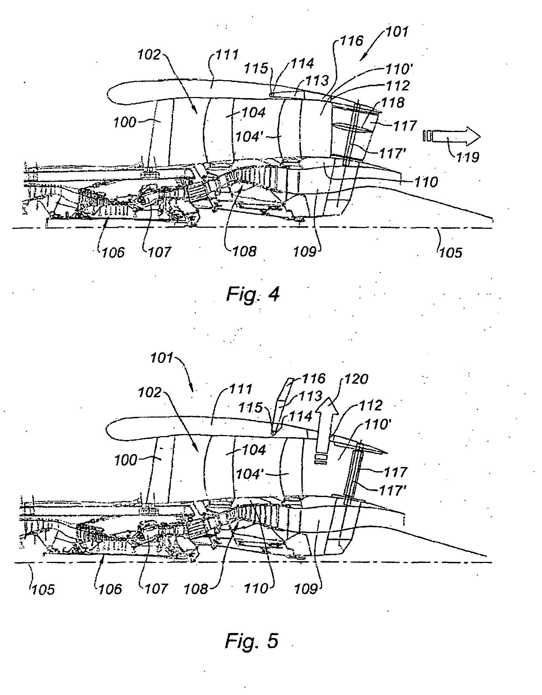

Une autre mise en oeuvre de l'invention, sur un type de turboréacteur différent, va maintenant être décrite, en lien avec les figures 4 et 5.

Les figures 4 et 5 sont des représentations d'un turboréacteur 101 à soufflante aval double 102. Cette soufflante 102, positionnée dans la partie aval du turboréacteur 101, comprend classiquement deux séries d'aubes radiales 104, 104', les aubes 104, 104' d'une même série étant situées à la même abscisse longitudinale sur l'axe 105 du turboréacteur 101. Les aubes 104, 104', montées rotatives autour de l'axe 105 du turboréacteur, génèrent le flux d'air secondaire fournissant en grande partie la poussée du turboréacteur 101.

Le flux primaire, qui prend sa source à l'extrémité amont du turboréacteur, traverse successivement des étages de compresseurs 106, une chambre de combustion 107, des étages de turbines 108 et une tuyère d'échappement 109, notamment. L'ensemble de ces éléments du coeur du turboréacteur sont enveloppés par un carter 110, nommé par la suite carter du coeur du turboréacteur 110.

Les aubes 104, 104' sont montées rotatives autour du carter du coeur du turboréacteur 110 et sont entraînées en rotation par la rotation des étages de turbines 108. Elles sont enveloppées par une nacelle 111. Des bras 100 sont disposés en amont des aubes 104, 104' afin de supporter la nacelle 111 et de guider et orienter l'air vers la soufflante 102.

De même que précédemment, la nacelle 111 définit, en aval de la série d'aubes aval 104', une tuyère secondaire 110' de guidage du flux d'air secondaire. Cette tuyère secondaire 110' est moins étendue axialement que précédemment, puisque les aubes 104, 104' sont dans la partie aval du turboréacteur 101. Le turboréacteur 101 possède un rapport de dilution élevé, typiquement supérieur ou égal à 10, et une surface frontale, c'est-à-dire la surface générée par la soufflante 102 et le turboréacteur 101 vu de face sur l'axe 105 du turboréacteur, importante, créant donc une forte traînée.

La nacelle 111 comprend, en aval de la série d'aubes aval 104', au moins un orifice 112 qui peut être fermé ou ouvert par un bras mobile 113 correspondant, ci-après dénommé porte 113. L'extrémité 114 de la porte 113 est fixée à un axe 115 solidaire de la nacelle 111, qui s'étend perpendiculairement à l'axe 105 du turboréacteur 101. La porte 113 est montée mobile en rotation dans un plan axial autour de cet axe 115. Son extrémité libre 116 est conformée pour venir fermer l'orifice 112 lorsque la porte 113 est abaissée et l'ouvrir lorsqu'elle est relevée, la porte 113 s'étendant alors sensiblement dans un plan transversal du turboréacteur 101. Le turboréacteur 101 comporte ici deux orifices et deux portes 113 correspondantes, diamétralement opposés.

Le turboréacteur 101 comprend, en aval des portes 113 et ici à la sortie de la tuyère secondaire 110', des panneaux profilés 117, s'étendant radialement, globalement suivant un axe 117', entre le carter du coeur du turboréacteur 110 et la nacelle 111.

Sur la figure 4, on a représenté, à l'intérieur des panneaux 117, une vue en coupe 118 de ces éléments, suivant un plan transverse à l'axe radial 117' selon lequel ils s'étendent. On voit que les panneaux 117 sont profilés de façon à former un profil comparable à celui d'une aube et ainsi assurer une fonction de guidage, d'orientation et de redressement du flux d'air secondaire à la sortie de la tuyère secondaire 110'.

Les panneaux profilés 117 sont montés rotatifs autour de leur axe 117'. Il est ainsi possible, de même que précédemment, et en référence à la figure 5, de les faire pivoter de 90° autour de leur axe 117' afin de les faire s'étendre transversalement à l'axe 105 du turboréacteur 101.

Le fonctionnement du turboréacteur à soufflante aval double des figures 4 et 5, dans le cadre du procédé de freinage d'un avion de l'invention, est en tous points similaire à celui du turboréacteur à soufflante amont simple.

En référence à la figure 4, en configuration de vol, les portes 113 sont abaissées, c'est-à-dire les orifices 112 fermés, et les panneaux 117 orientés de façon à orienter le flux d'air secondaire, schématisé par une flèche 119, en sortie de la tuyère secondaire 110'.

Lors de la phase d'atterrissage de l'avion, le turboréacteur 101 est mis en régime de ralenti afin de réduire sa poussée et de permettre à l'avion de se poser. Une fois que l'avion a atterri, l'avion est de même que précédemment freiné grâce à la traînée générée par le fort diamètre de la soufflante 102 qui tourne au ralenti.

En fin de course, une décharge du flux d'air secondaire est opérée. Les portes 113 sont relevées, c'est-à-dire que les orifices 112 sont ouverts, laissant l'air du flux d'air secondaire s'échapper par les orifices 112, et les panneaux 117 sont ensuite amenés à pivoter autour de leur axe 117', afin qu'ils s'étendent transversalement à l'axe 105 du turboréacteur, de façon comparable à la figure 3.

Dans cette configuration de freinage, la poussée du flux d'air secondaire est grandement réduite. Le flux d'air secondaire, bloqué par les panneaux 117, s'échappe librement par les orifices 112, comme représentée par la flèche 120 sur la figure 5, sans produire de poussée. Typiquement, les orifices 112 présentent une surface de décharge représentant environ 10% de la section de la tuyère secondaire à l'abscisse des orifices 112. Les portes 113, déployées radialement à l'extérieur de la nacelle 111, remplissent en outre une fonction d'aérofreins, augmentant la force de traînée du turboréacteur et facilitant de ce fait le freinage.

L'invention a été présentée en lien avec deux types de turboréacteurs différents. Il va de soi qu'elle s'applique à tout type de turboréacteur comportant une soufflante, que cette soufflante soit simple, double ou plus, aval, amont, contrarotative, ... Quel que soit le type de turboréacteur, l'ensemble constitué par les portes 13, 113 et les panneaux 17, 117 est placé en aval de la soufflante pour permettre une décharge du flux d'air secondaire dans une phase de freinage de l'avion.

Une autre fonction des panneaux 17, 117 va maintenant être présentée. Elle s'applique aux turboréacteurs dont le rapport de dilution est supérieur ou égal à 13. Dans ce type de turboréacteurs, il est nécessaire, entre la phase de décollage et la phase de croisière, de réduire la section de la tuyère secondaire, pour des raisons de dynamique des fluides bien connues de l'homme du métier. A cet effet, les panneaux 17, 117 peuvent être amenés à pivoter de quelques degrés pour réduire la section de la tuyère secondaire.

L'invention a été présentée en lien avec des portes 13, 113 montées rotatives et des panneaux 17, 117 montés pivotant. Toutefois, il pourrait être envisagé d'autres moyens assurant, respectivement, une fonction d'ouverture radiale de la nacelle, permettant une décharge du flux secondaire sans génération de poussée, avec éventuellement une fonction d'aérofreins, et une fonction d'obstruction de la tuyère secondaire 10, 110' en aval des moyens d'ouverture. Ainsi, par exemple, les portes 13, 113 pourraient être remplacées par des panneaux coulissant pouvant fermer ou ouvrir les ouvertures 12, 112. De même, les panneaux pivotants 17, 117 pourraient être remplacés par des panneaux coulissants logés dans la nacelle 9, 111 et qui descendraient dans la tuyère secondaire 10, 110' lorsqu'on décide d'obstruer le passage du flux d'air secondaire.

L'invention a en outre été présentée en lien avec des ouvertures 12, 112 dans la nacelle 9, 111 au nombre de deux, mais il va de soi qu'une seule ouverture, ou encore un plus grand nombre d'ouvertures, pourraient être prévues.

En outre, l'invention a été présentée en lien avec un procédé de freinage lors d'un atterrissage de l'avion. L'invention s'applique également à tout autre procédé de freinage, par exemple lors d'un décollage avorté. Dans ce cas, le procédé peut être quelque peu changé. Ainsi, si un décollage doit être avorté, il faut en général agir très vite. Dès l'avortement du décollage de l'avion décidé, le turboréacteur 1, 101 est mis au ralenti et, simultanément, les portes 13, 113 sont ouvertes. Une fois le débit du flux d'air secondaire suffisamment réduit, les panneaux 17, 117' sont amenés à pivoter pour obstruer la tuyère secondaire 10, 110' et forcer l'air à passer dans les ouvertures 12, 112.

## Revendications

1. - Procédé de freinage d'un avion, propulsé par au moins un turboréacteur (1, 101) à double flux, ce dernier comprenant une soufflante (2, 102), un coeur de turboréacteur dans lequel circule le flux primaire, une tuyère d'échappement du flux secondaire (10, 110'), enveloppée par une nacelle (9, 111), **caractérisé par le fait, qu'**en régime de ralenti, on décharge au moins une partie du flux secondaire (20, 120) de manière à réduire la poussée résiduelle du turboréacteur sans produire de contre-poussée.

2. - Procédé de freinage selon la revendication 1, dans lequel on décharge la totalité du flux secondaire de manière à réduire la poussée résiduelle du turboréacteur (1, 101) à la seule poussée du flux primaire.

3. - Procédé de freinage selon l'une des revendications 1 ou 2, dans lequel on décharge le flux secondaire par l'ouverture de moyens d'ouverture radiale ((12, 13), (112, 113)) de la nacelle (9, 111).

4. - Procédé de freinage selon la revendication 3, dans lequel on obstrue la section de la tuyère d'échappement du flux secondaire (10, 110') en aval des moyens d'ouverture radiale ((12, 13), (112, 113)) grâce à des moyens d'obstruction (17, 117) de ladite tuyère (10, 110').

5. Turboréacteur à double flux, comprenant une soufflante (2, 102), un coeur de turboréacteur dans lequel circule le flux primaire, une tuyère d'échappement du flux secondaire (10, 110'), enveloppée par une nacelle (9, 111), des moyens d'ouverture radiale ((12, 13), (112, 113)) de la nacelle (9, 111) permettant de décharger une partie du flux secondaire (20, 120), **caractérisé par le fait que** lesdits moyens d'ouverture radiale permettent de décharger une partie du flux secondaire sans produire de contre-poussée.

6. - Turboréacteur selon la revendication 5, dans lequel les moyens d'ouverture radiale ((12, 13), (112, 113)) comportent au moins un orifice (12, 112) pouvant être fermé ou ouvert par une porte (13, 113).

7. - Turboréacteur selon la revendication 6 dans lequel, lorsque l'orifice (12, 112) est ouvert par la porte (13, 113), cette dernière assure une fonction d'aérofrein.

8. Turboréacteur selon l'une des revendications 5 à 7 comprenant, en aval des moyens d'ouverture radiale ((12, 13), (112, 113)), des moyens d'obstruction (17, 117) de la tuyère d'échappement du flux secondaire (10, 110').

9. - Turboréacteur selon la revendication 8, dans lequel les moyens d'obstruction comprennent au moins un panneau profilé (17, 117) s'étendant suivant un axe radial (17', 117') dans la tuyère d'échappement du flux secondaire (10, 110') et monté rotatif autour de son axe (17', 117').

10. Turboréacteur selon la revendication 9, dans lequel le panneau (17, 117) est profilé de façon à pouvoir assurer une fonction de guidage, d'orientation et de redressement du flux d'air secondaire (19, 119) dans la tuyère d'échappement du flux secondaire (10, 110').

11. Turboréacteur selon l'une des revendications 5 à 10, dont le rapport de dilution est supérieur ou égal à 10.

## Claims

1. - Method for braking an aircraft propelled by at least one ducted fan jet engine, the latter comprising a fan, a jet engine core in which the primary flow circulates, a secondary flow exhaust nozzle, encased by a nacelle, **characterized by** the fact that, in low-power operation, at least part of the secondary flow is unloaded so as to reduce the residual thrust of the jet engine without producing any counter-thrust.

2. - Braking method as in claim 1, wherein the entirety of the secondary flow is unloaded so as to reduce the residual thrust of the jet engine to the sole thrust of the primary flow.

3. - Braking method as in one of claims 1 or 2, wherein the secondary flow is unloaded by opening radial opening means of the nacelle.

4. - Braking method as in claim 3, wherein the section of the secondary flow exhaust nozzle is obstructed downstream of the radial opening means using obstructing means to obstruct said nozzle.

5. - Ducted fan jet engine comprising a fan, a jet engine core in which the primary flow circulates, a secondary flow exhaust nozzle, encased by a nacelle, radial opening means of nacelle enabling the unloading of part of the secondary flow, **characterized by** the fact that the radial opening means enable the unloading of part of the secondary flow without producing any counter-thrust.

6. - Jet engine as in claim 5, wherein the radial opening means comprise at least one orifice that can be closed or opened by a door.

7. - Jet engine as in claim 6, wherein, when the orifice is opened by the door, this door ensures an airbrake function.

8. - Jet engine as in one of claims 5 to 7 comprising, downstream of the radial opening means, obstruction means to obstruct the secondary flow exhaust nozzle.

9. - Jet engine as in claim 8, wherein the obstruction means comprise at least one profiled panel extending along a radial axis in the secondary flow exhaust nozzle and rotationally mounted about its axis.

10. - Jet engine as in claim 9, wherein the panel is profiled so as to ensure a guiding, directing and rectifying function for the secondary air flow in the secondary flow exhaust nozzle.

11. - Jet engine as in one of claims 5 to 10 whose bypass ratio is 10 or over.

## Patentansprüche

1. Verfahren zum Bremsen eines Flugzeugs, das durch mindestens ein Zweikreis-Turboluftstrahltriebwerk (1, 101) angetrieben wird, wobei Letzteres ein Gebläse (2, 102), ein Turboluftstrahlinneres, in dem der Primärstrom zirkuliert, eine Mantelstrom-Ausstoßdüse (10, 110'), die von einer Triebwerksgondel (9, 111) umgeben ist, umfasst,
**dadurch gekennzeichnet,**
**dass** im Leerlaufbetrieb mindestens ein Teil des Mantelstroms (20, 120) abgelassen wird, so dass der Restschub des Turbotriebwerks reduziert wird, ohne einen Gegenschub zu erzeugen.

2. Verfahren zum Bremsen nach Anspruch 1, bei dem die Gesamtheit des Mantelstroms abgelassen wird, so dass der Restschub des Turboluftstrahltriebwerks (1, 101) auf den Schub des Primärstroms allein reduziert wird.

3. Verfahren zum Bremsen nach einem der Ansprüche 1 oder 2, bei dem der Mantelstrom durch das Öffnen von Mitteln zum radialen Öffnen ((12, 13), (112, 113)) der Triebwerksgondel (9, 111) abgelassen wird.

4. Verfahren zum Bremsen nach Anspruch 3, bei dem der Abschnitt der Mantelstrom-Ausstoßdüse (10, 110') hinter den Mitteln zum radialen Öffnen ((12, 13), (112, 113)) mit Hilfe von Verschließmitteln (17, 117) dieser Düse (10, 110') verschlossen wird.

5. Zweikreis-Turboluftstrahltriebwerk mit einem Gebläse (2, 102), einem Turboluftstrahlinneren, in dem der Primärstrom zirkuliert, einer Mantelstrom-Ausstoßdüse (10, 110'), die von einer Triebwerksgondel (9, 111) umgeben ist, und mit Mitteln zum radialen Öffnen ((12, 13), (112, 113)) der Triebwerksgondel (9, 111), die es ermöglichen, einen Teil des Mantelstroms (20, 120) abzulassen,
**dadurch gekennzeichnet,**
**dass** diese Mittel zum radialen Öffnen es ermöglichen, einen Teil des Mantelstroms abzulassen, ohne einen Gegenschub zu erzeugen.

6. Turboluftstrahltriebwerk nach Anspruch 5, bei dem die Mittel zum radialen Öffnen ((12, 13), (112, 113)) mindestens eine Öffnung (12, 112) umfassen, die durch eine Klappe (13, 113) geschlossen oder geöffnet werden kann.

7. Turboluftstrahltriebwerk nach Anspruch 6, bei dem die Klappe (13, 113), wenn sie die Öffnung (12, 112) in Öffnungsstellung freigibt, eine Funktion als Bremsklappe erfüllt.

8. Turboluftstrahltriebwerk nach einem der Ansprüche 5 bis 7, welches hinter den Mitteln zum radialen Öffnen ((12, 13), (112, 113)) Verschließmittel (17, 117) für die Mantelstrom-Ausstoßdüse (10, 110') aufweist.

9. Turboluftstrahltriebwerk nach Anspruch 8, bei dem die Verschließmittel mindestens eine Profilplatte (17, 117) umfassen, die sich entlang einer radialen Achse (17', 117') in der Mantelstrom-Ausstoßdüse (10, 110') erstreckt und um deren Achse (17', 117') herum drehbar angebracht ist.

10. Turboluftstrahltriebwerk nach Anspruch 8, bei dem die Platte (17, 117) ein Profil dergestalt aufweist, dass sie eine Funktion der Führung, der Ausrichtung und des Geraderichtens des Mantelluftstroms (19, 119) in der Mantelstrom-Ausstoßdüse (10, 110') hat.

11. Turboluftstrahltriebwerk nach einem der Ansprüche 5 bis 10, dessen Verdünnungsverhältnis größer oder gleich 10 ist.
